**Europäisches Patentamt**

**European Patent Office**

**Office européen des brevets**

(19)

(11) Veröffentlichungsnummer: **0 102 469**
**B1**

(12)

# EUROPÄISCHE PATENTSCHRIFT

(45) Veröffentlichungstag der Patentschrift:
**14.05.86**

(21) Anmeldenummer: **83106285.6**

(22) Anmeldetag: **28.06.83**

(51) Int. Cl.⁴: **F 16 D 69/04**

(54) **Bremsbelagträger für Teilbelagscheibenbremsen, insbesondere von Schienenfahrzeugen.**

(30) Priorität: **23.08.82 DE 3231279**

(43) Veröffentlichungstag der Anmeldung:
**14.03.84 Patentblatt 84/11**

(45) Bekanntmachung des Hinweises auf die Patenterteilung:
**14.05.86 Patentblatt 86/20**

(84) Benannte Vertragsstaaten:
**DE FR GB IT**

(56) Entgegenhaltungen:
**DE - A - 2 547 530**
**DE - C - 927 905**
**US - A - 2 713 923**
**US - A - 2 904 138**
**US - A - 2 943 713**
**US - A - 3 198 294**

(73) Patentinhaber: **KNORR-BREMSE AG, Moosacher Strasse 80 Postfach 401060, D-8000 München 40 (DE)**

(72) Erfinder: **Pöllinger, Hans, Rainfarnstrasse 65, D-8000 München 45 (DE)**
Erfinder: **Saumweber, Eckart, Dr., Mühlstrasse 15, D-8035 Gauting (DE)**
Erfinder: **Schörwerth, Mathias, Frauenschuhweg 10a, D-8192 Geretsried 1 (DE)**
Erfinder: **Wirth, Xaver, Dr., Birkhuhnweg 18, D-8045 Ismaning (DE)**

ACTORUM AG

**Beschreibung**

Die Erfindung bezieht sich auf einen Bremsbelagträger für Teilbelagscheibenbremsen, insbesondere von Schienenfahrzeugen, mit einer Grundplatte, die einerseits einen Reibbelag trägt und andererseits gegebenenfalls lösbar mit einem Trag- oder Betätigungselement der Bremszuspannvorrichtung verbunden ist, wobei der Reibbelag in einzelne Reibbelagelemente aufgegliedert ist, die senkrecht zur Reibfläche elastisch an der Grundplatte gehaltert sind.

Derartige Bremsbelagträger sind beispielsweise aus den DE-Patentschriften 1 575 773 und 1 575 774 bekannt. Die Reibbeläge sind hierbei in Aufsicht trapezartig geformt und lassen sich in zwei Grössenklassen einordnen, innerhalb jeder Grössenklasse sind die Reibbeläge gleichartig ausgebildet. Die Reibbeläge sind mit relativ grossem Abstand zueinander mit einer zumindest mehreren, vorzugsweise jedoch allen Reibbelägen gemeinsamen Belagträgerplatte verbunden. Die Belagträgerplatte kann aus einer gewebten Matte oder einem senkrecht zur Reibfläche gewellten bzw. auf einer entsprechend gewellten Oberfläche der Grundplatte aufliegenden Blechteil bestehen, in jedem Falle ist die Trägerplatte senkrecht zur Reibfläche elastisch verformbar. An ihren Enden und im Freiraum zwischen den einzelnen Reibbelägen ist jede Belagträgerplatte mittels bolzenförmiger, in der Grundplatte gehaltener Verbindungsglieder unter entsprechender, elastischer Verformung der Belagträgerplatte auf die Grundplatte aufgespannt. Diese Bremsbelagträger erlauben zwar ein Anpassen der elastisch gehalterten Reibbeläge an Unebenheiten der Bremsscheibe, sie weisen jedoch infolge der vielen und relativ grossen Freiräume zwischen den einzelnen Bremsbelägen bei insgesamt grossem Bauvolumen ein insgesamt nur geringes, für die maximale Betriebszeit des Bremsbelagträgers massgebendes Reibbelagvolumen auf. Ausserdem können trotz ihrer elastischen Lagerung die einzelnen, voneinander getrennten Reibbeläge in Schwingungen geraten bzw. die Bremsscheibe zu Schwingungen anregen, was zu durchdringenden Quietschgeräuschen führen kann.

Für Scheibenbremsen von Schienenfahrzeugen sind an der Zuspannvorrichtung angelenkte Bremsbackenträger bekannt, welche bremsscheibenseitig eine langgestreckte Schwalbenschwanzführung aufweisen, in welche ein an der Rückseite eines Bremsbelages vorgesehener Schwalbenschwanz einführbar und arretierbar ist. Ein derartiger Bremsbackenträger ist beispielsweise der DE-OS 2 547 530 entnehmbar.

Es ist Aufgabe der Erfindung, einen Bremsbelagträger der eingang genannten Art derart auszugestalten, dass, bezogen auf die Grösse des Bremsbelagträgers, eine grosse Reibfläche mit entsprechend niedriger Flächenpressung während Bremsungen sowie ein grosses, verschleissbares Reibbelagvolumen zum Erzielen langer Betriebszeiten erreichbar ist. Während Bremsungen soll dabei eine wenigstens teilweise Abkoppelung der einzelnen Reibbeläge von der Grundplatte sowie eine grossflächige und kräftige gegenseitige Anlage der einzelnen Reibbeläge untereinander erfolgen, wodurch einerseits durch Abkoppelung schwingfähiger Teile und andererseits durch Reibungsdämpfung Quietschgeräusche vermieden oder doch wenigstens gemildert werden. Die Halterung der Reibbeläge muss dabei, um lange Betriebszeiten zu ermöglichen, dauerfest sein, die Montage des Bremsbelagträgers muss in einfacher Weise möglich sein. Schliesslich soll wie beim Stand der Technik durch geeignete, elastische Lagerung der Reibbeläge ein gleichmässiges Tragbild sowohl für jeden einzelnen Reibbelag als auch für alle, einem Bremsbelagträger zugehörende Reibbeläge erzielbar sein, um örtliche Überbeanspruchungen und Überhitzungen sowohl der Reibbeläge als auch der Bremsscheibe zu vermeiden. Weiter soll die Möglichkeit geboten werden, den Bremsbelagträger in Verbindung mit üblichen Bremsbackenträgern von Schienenfahrzeug-Scheibenbremsen verwenden zu können.

Diese Aufgabe wird nach der Erfindung dadurch gelöst, dass die Grundplatte in ihrem Randbereich als Fassung ausgebildet ist, dass die gemeinsam einen Reibbelagblock bildenden Reibbelagelemente an der Fassung gehaltert sind, wobei die einzelnen Reibbelagelemente ein Verschiebespiel parallel zur Reibfläche aufweisen, und das in Wirkrichtung der an der Reibfläche während Bremsvorgängen auftretenden Reibkräfte die Reibbelagelemente unter gegenseitiger Abstützung einander anlegbar und gemeinsam gegen die Fassung abstützbar sind.

Dabei ist es nach der weiteren Erfindung zum Erzielen einer einfachen, billigen Konstruktion unter Verwendung von Reibbelagelementen, die fest mit überstehenden Belagträgerblechen verbunden sind, welche mittel bolzenartiger Verbindungsblieder an der Grundplatte gehaltert sind, zweckmässig, wenn der Reibbelagblock eine in Aufsicht nahezu geschlossene Form aufweist, wobei sich in wenigstens einem Zentralbereich eine zum Reibbelagblock kleine Aussparung befindet, wenn die Belagträgerbleche die Reibbelagelemente jeweils an wenigstens zwei Kanten oder Ecken mit Halterändern überragen, die im Reibbelagblock nach aussen oder zum Zentralbereich weisen, an den restlichen Kanten und Ecken dagegen etwa ebenflächig zu den Seitenwandungen der Reibbelagelemente enden, wenn die unterbrochen oder umlaufend ausgebildete Fassung in Aufsicht dem Grundriss des Reibbelagblockes entspricht und aus einem in Richtung zur Reibfläche abgewinkelten Halterand mit Haltenut gebildet ist, und wenn die Reibbelagelemente den Reibbelagblock bildend unter Zwischenlage wenigstens einer elastischen Zwischenschicht auf der Grundplatte aufgespannt sind, wobei die nach aussen weisenden Halteränder in die Haltenut und die dem Zentralbereich zugewandten Halteränder unter einen auskragenden Kopfabschnitt des in jedem Zentralbereich befindlichen, an der Grundplatte gehaltenen Verbindungsgliedes unter senkrecht zur Reibfläche gerichteter Vorspannung eingespannt sind. Der so augebildete Bremsbelagträger erfüllt bei einfachem Aufbau die aufgabengemässen, unbedingten Forderungen und ist in einfacher Weise gemäss den Merkmalen der Unteransprüche 3 bis 16 auch derart ausbildbar, dass er den weiteren Forderungsmöglichkeiten entspricht.

In den Zeichnungen sind Ausführungsbeispiele für nach der Erfindung ausgebildete Bremsbelagträger dargestellt, und zwar zeigt

Figur 1 einen Bremsbelagträger in Aufsicht,

Figur 2 einen Schnitt gemäss Linie II-II in Fig. 1,

Figur 3 und 4 einen Schnitt bzw. Teilschnitt durch geänderte Ausführungsformen,

Figur 5 ein Halbbild eines Bremsbelagträgers mit geänderten Reibbelagelementen in Aufsicht,

Fig. 6 eine weitere Ausführungsform des Bremsbelagträgers in Aufsicht,

Figur 7 eine Teilaufsicht auf eine weitere Ausführungsform des Bremsbelagträgers mit geänderten Reibbelagelementen,

Fig. 8 eine abgewandelte Ausführungsform des Reibbelagblocks,

Figur 9 eine Aufsicht auf einen Reibbelagblock nach Fig. 6 mit untergelegter, elastischer Zwischenschicht,

Figur 10 einen Schnitt durch einen auf einer Grundplatte montierten Reibbelagblock nach Fig. 9,

Figur 11 einen Abschnitt einer elastischen Zwischenschicht in perspektivischer Darstellung,

Figur 12 einen Reibbelagblock in Aufsicht entsprechend Figur 1, jedoch mit Zwischenschicht-Abschnitten gemäss Fig. 11, und

Figur 13 ein Schemabild der Seitenansicht zweier auf einem Zwischenschicht-Abschnitt gemäss Figur 11 aufliegender Reibbelagelemente.

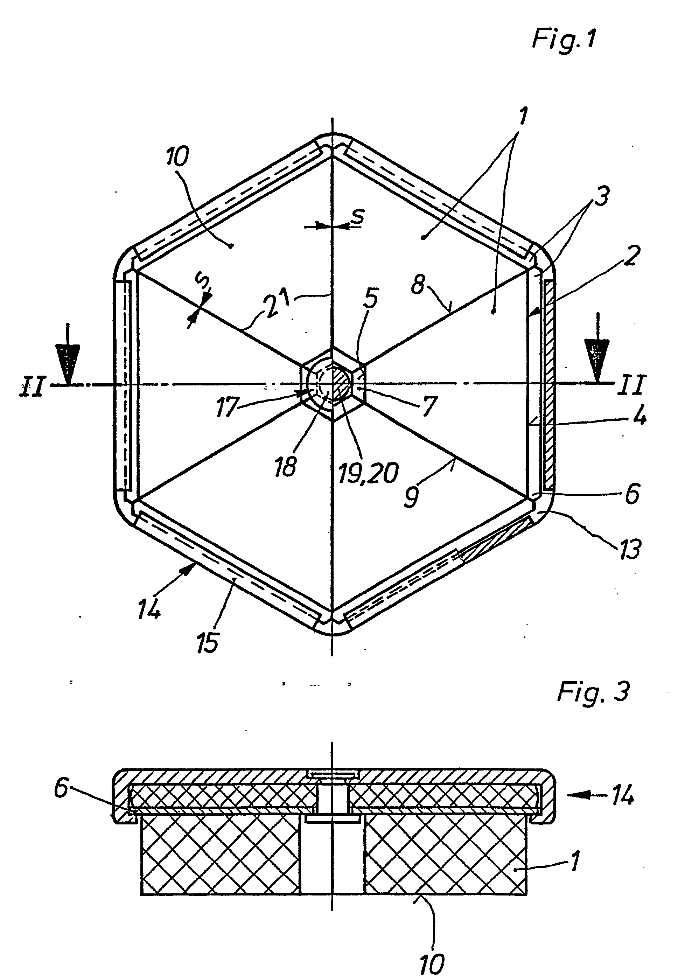

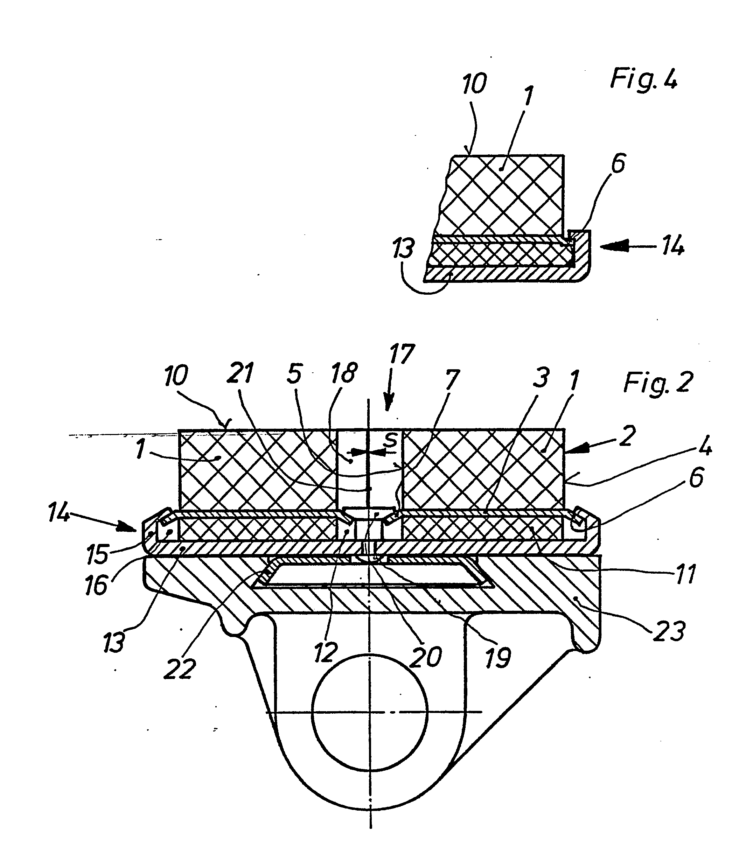

Gemäss Figur 1 sind sechs in Aufsicht jeweils einem gleichseitigen Dreieck mit gebrochenen Ecken entsprechende, einzelne Reibbelagelemente 1 zu einem sechseckigen Reibbelagblock 2 zusammengesetzt. Jedes Reibbelagelement 1 ist auf seiner Rückseite, wie auch aus Figur 2 ersichtlich, mit einem Belagträgerblech 3 fest verbunden, welches an der im Reibbelagblock 2 nach aussen gerichteten Längsseite 4 und an der dieser Längsseite 4 gegenüberliegenden Ecke 5 des Reibbelag-Dreieckes jeweils mit einem Halterand 6 bzw. 7 übersteht. An den beiden weiteren Längsseiten (Seitenwandungen) 8 und 9 jedes Reibbelagelementes 1 endet das Belagträgerblech 3 ohne überstehenden Halterung ebenflächig zum Reibbelagelement 1. Die den Belagträgerblechen 3 abgewandten Oberseiten der Reibbelagelemente 1 bilden gemeinsam die Reibfläche 10. Die Halteränder 6 und 7 sind, wie aus Figur 2 ersichtlich, leicht in Entfernungsrichtung von der Reibfläche 10 abgewinkelt. Die Reibbelagelemente 1 liegen seitens der Belagträgerbleche 3 auf einer in Ansicht etwa derjenigen des Reibbelagblockes 2 entsprechenden, elastischen Zwischenschicht 11 auf, welche aus einem Elastomer gefertigt sein kann, welche jedoch auch als gewebte Matte entsprechend der bereits erwähnten DE-PS 1 575 773 ausgebildet sein kann. Die mit einer zentralen Aussparung 12 versehene Zwischenschicht 11 liegt auf einer Grundplatte 13 auf, welche in Aufsicht etwa die Form des Reibbelagblockes 2 aufweist und in ihrem Randbereich als Fassung 14 ausgebildet ist. Die Fassung 14 besteht aus einem in Richtung zur Reibfläche 10 abgewinkelten Halterand 15 der Grundplatte 13, der eine Haltenut 16 bildet. Die abgewinkelten Halteränder 6 greifen in die entsprechend geformte Haltenut 16 ein, wie aus Fig. 2 ersichtlich ist. Die Fassung 14 kann um den ganzen Aussenumfang der Grundplatte 13 geschlossen umlaufend ausgebildet sein, sie kann jedoch auch, wie aus Figur 1 ersichtlich, unterbrochen ausgebildet sein, derart, dass sich nur an den geraden Längsseiten 4 des Reibbelagblockes 2 einzelne Fassungs-Abschnitte befinden.

Infolge der gebrochenen Ecken 5 weist der Reibbelagblock 2 in seinem Zentralbereich 17 eine kleine Aussparung 18 auf, in welche die Halteränder 7 den Querschnitt der Aussparung 18 nicht ganz ausfüllend hineinragen.

In die Aussparung 18 greift ein bolzenartiges Verbindungsglied 19 ein, das beispielsweise durch Vernieten fest mit der Grundplatte 13 verbunden ist und das mit seinem auskragenden Kopfabschnitt 20 die Halteränder 7 übergreift. Die Belagträgerbleche 3 sind somit unter Vorspannung durch Zusammendrücken der Zwischenschicht 11 an der Fassung 14 und am Verbindungsglied 19 gehaltert, wobei die Reibbelagelemente 1 jedoch ein gewisses, seitliches Verschiebespiel s in der Ebene der Figur 1 aufweisen. Die einzelnen, zu dem Reibbelagblock 2 zusammengefügten Reibbelagelemente 1 können sich somit mit ihren gesamten, einander zugewandten Seitenflächen 21 aneinander anlegen.

An der den Reibbelagelementen 1 abgewandten Seute trägt die Grundplatte 13 einen langgestreckten, schwalbenschwanzförmigen Ansatz 22, mit welchen sie in der Schwalbenschwanzführung eines Bremsbackenträgers 23 einführ- und befestigbar ist. Der Bremsbackenträger 23 ist von üblicher Bauart, er kann beispielsweise der bereits erwähnten DE-OS 2 547 530 entsprechen.

Zum Bremsen wird der Bremsbelagträger mit der Reibfläche 10 gegen eine abzubremsende, rotierende Bremsscheibe angepresst. Eventuelle Unebenheiten der Bremsscheibe oder der einzelnen Reibbelagelemente 1 können dabei durch entsprechende Kompression der elastischen Zwischenschicht 11 ausgeglichen werden, so dass eine gleichmässige Anlage und Anpressung über die gesamte Reibfläche 10 erfolgen kann. Auch die einzelnen Reibbelagelemente 1 können sich dabei entsprechend ihrem gegebenenfalls geringfügig voneinander abweichenden Verschleisszustand auf der elastischen Zwischenschicht 11 derart einstellen, dass die gleichmässige Anpressung an die Reibscheibe nicht gestört wird. Die an der Reibfläche 10 angrenzende Reibkraft versucht die einzelnen Reibbelagelemente 1 mitzunehmen, die Reibbelagelemente 1 werden daher von seiten des Bremsscheiben-Einlaufes her zusammengedrückt, wobei sie einlaufseitig ausser Berührung zur Grundplatte 13 bzw. deren Fassung — jedoch noch in diese eingreifend — gelangen und somit von der Grundplatte zur Geräuschdämpfung abgekoppelt werden; zugleich werden ihre jeweiligen Seitenflächen 21 mit einer der Reibkraft und somit der Bremswirkung entsprechenden Kraft zusammengepresst. Das bzw. die bremsscheiben-auslaufseitigen Reibbelagelemente 1 stützen sich an der Fassung 14 ab und übertragen durch diese die Reibkraft auf die Grundplatte 13, welche ihrerseits vom Bremsbackenträger 23 gehalten ist. Das Zusammenpressen der Seitenflächen 21 bewirkt, dass die einzelnen Reibbelagelemente 1 des Belagträgerbleches 3 nur unter beachtlicher Reibung gegeneinander verschiebbar sind, wodurch in einzelnen Reibbelagelementen 1 bzw. dem gesamten Reibbelagblock 2 auftretende Schwingungen in Reibarbeit umgesetzt und somit stark gedämpft werden; ein Quietschen der Scheibenbremsen ist damit praktisch ausgeschlossen.

Zur Montage des Bremsbelagträgers können nach Einlegen der Zwischenschicht 11 in die Grundplatte 13 die einzelnen Reibbelagelemente 1 bei noch fehlendem Verbindungsglied 19 leicht in die Fassung 14 eingeschoben und zum Reibbelagblock 2 zusammengesetzt werden; anschliessend wird das Verbindungsglied 19 eingesetzt und mit der Grundplatte 13 verbunden. Die Montage ist somit sehr einfach möglich.

Der Halterand 6 und die Fassung 14 können konstruktive Abwandlungen erfahren, wie beispielsweise aus Figur 3 und Figur 4 ersichtlich ist: Gemäss Fig. 3 ist der Halterand 6 eben zum Belagträgerblech 3 ausgeführt, und die Fassung 14 weist eine entsprechende Form auf. Diese einfachere Gestaltung bedingt jedoch, dass die Reibbelagelemente 1 nicht so weit verschlissen werden können, wie es bei der Ausführung nach Figur 2 möglich ist, in welcher die Fassung 14 nur eine geringere, sich mit dem Reibbelagelement 1 überschneidende Höhe senkrecht zur Reibfläche 10 aufweist.

Bezogen auf Fig. 3 ist bei der Ausführung nach Fig. 4 wiederum ein weitergehender Verschleiss der Reibbelagelemente 1 möglich, da der Halterand 6 in Richtung zur Grundplatte 13 hin abgesetzt ausgebildet ist und die Fassung 14 somit wiederum eine nur geringe, sich mit dem Reibbelagelement 1 überschneidende Höhe senkrecht zur Reibfläche 10 aufweist. Die Halteränder 7 auf seiten des Verbindungsgliedes 19 können jeweils entsprechend ausgebildet sein, im Bereich der Verbindungsglieder 19 ergeben sich damit entsprechende Verschleissmasse.

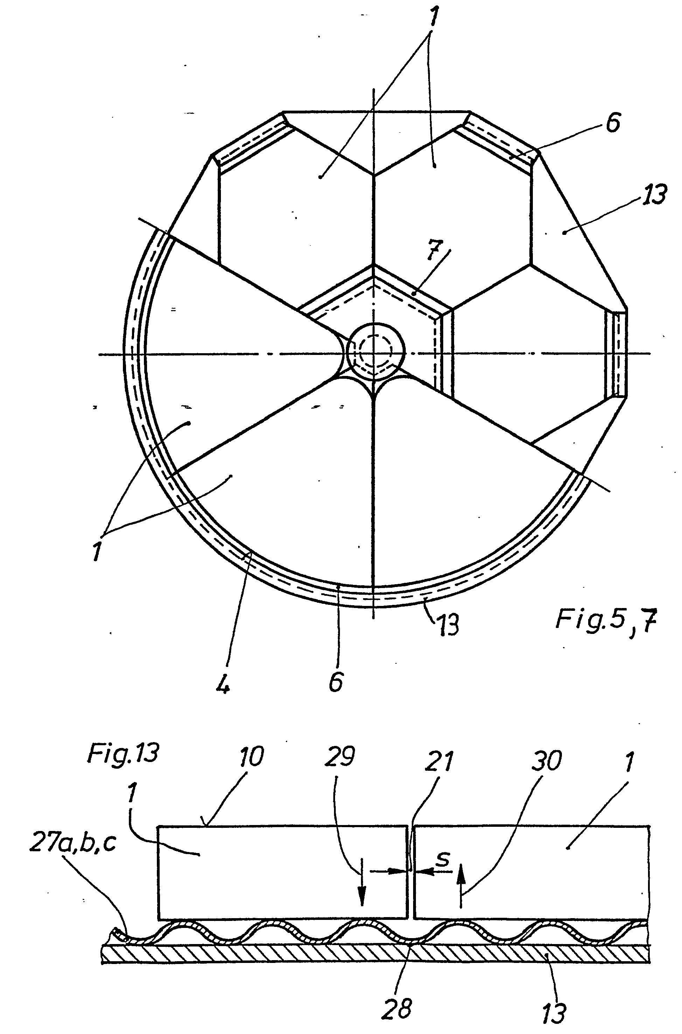

Die Reibbelagelemente 1 können gemäss Figur 5 auf ihrer einen, im zu einem Reibbelagblock zusammengesetzten Zustand nach aussen weisenden Seitenfläche bzw. Längsseite 4 gerundet bzw. gekrümmt ausgebildet sein, wobei der Krümmungsradius wenigstens annähernd dem Radius des aus den Reibbelagelementen 1 zusammensetzbaren Reibbelagblockes entspricht. Es ergibt sich somit ein in Aufsicht runder Reibbelagblock. Die Halteränder 6 sind entsprechend gekrümmt auszubilden, die Grundplatte 13 kann damit als Kreisplatte mit kreisringförmiger Fassung ausgebildet werden. Die Fassung wird hierbei zweckmässig geschlossen umlaufend ausgeführt. Im übrigen entspricht der Bremsbelagträger mit Reibbelagelementen 1 gemäss Figur 5 den vorstehend beschriebenen Merkmalen und braucht daher nicht weiter erläutert zu werden. Die beiden vorstehend beschriebenen Bremsbelagträger-Ausführungen sind neben einer Verwendung bei üblichen Bremsbackenträgern 23, in deren Schwalbenschwanzführung mehrere derartige Bremsbelagträger hintereinander einführ- und befestigbar sind, auch für Teilbelagscheibenbremsen geeignet, bei welchen die Bremsbeläge um eine durch ihren Reibmittelpunkt gehende, senkrecht zur Reibfläche verlaufende Achse rotieren.

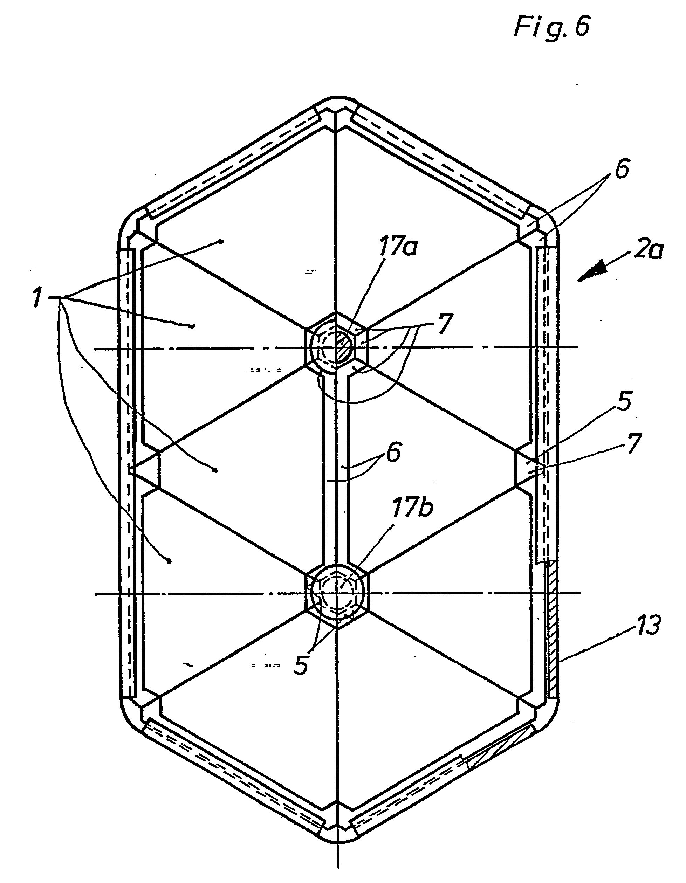

Speziell zur Verwendung mit Bremsbackenträger 23 gemäss Fig. 2 ist ein Bremsbelagträger geeignet, welcher einen Reibbelagblock 2a gemäss Fig. 6 aufweist, welcher aus zehn einzelnen Reibbelagelementen 1 gemäss Fig. 1 und 2 zusammengesetzt ist. Gemäss Fig. 6 sind jeweils vier Reibbelagelemente 1 derart nebeneinander angeordnet, dass sie mit Halterändern 7 zu einem gemeinsamen Zentralbereich 17a bzw. 17b weisen. Die beiden so gebildeten Gruppen von jeweils vier Reibbelagelementen 1 stehen sich spiegelbildlich gegenüber; zwischen diese beiden Gruppen sind die beiden restlichen Reibbelagelemente 1 mit ihrer den Halterand 7 aufweisenden Ecke 5 nach aussen weisend eingesetzt. Der Bremsbelagträger erhält somit eine ovalringartige Form mit zwei Zentralbereichen 17a und 17b und ist in jedem dieser Zentralbereiche mittels eines Verbindungsgliedes, in Figur 6 nicht dargestellt, an der eine dem Reibbelagblock 2a entsprechende Form aufweisenden Grundplatte 13 gehaltert.

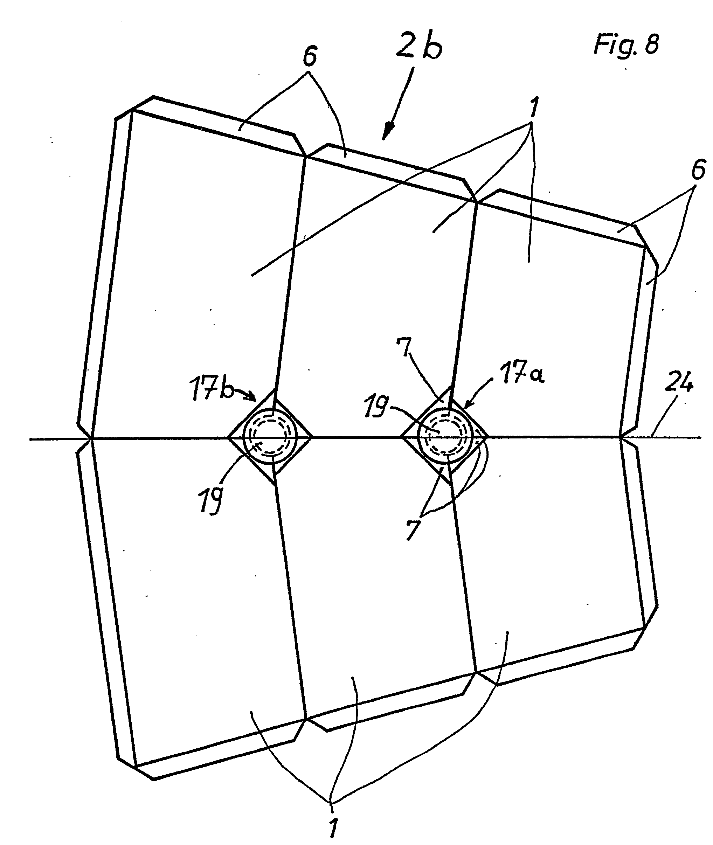

Die Form der einzelnen Reibbelagelemente kann den jeweiligen Erfordernissen angepasst werden, beispielsweise ist es gemäss Figur 7 möglich, die Reibbelagelemente 1 in Aufsicht sechseckig auszuführen und zu einem ringförmigen Reibbelagblock zusammenzufügen. Auch hier sind die Reibbelagelemente 1 auf ihren im Reibbelagblock nach aussen bzw. nach innen weisenden Seiten mit Halterändern 6 bzw. 7 zu versehen und in einer Fassung der entsprechend gestalteten Grundplatte 13 bzw. einem entsprechenden Kopfabschnitt eines zentralen, an der Grundplatte 13 befestigten Verbindungsgliedes zu halten.

Bei allen vorstehend beschriebenen Ausführungsformen werden jeweils völlig gleichartig ausgebildete Reibbelagelemente 1 zu einem Reibbelagblock 2 bzw. 2a zusammengefügt.

Falls unterschiedliche Formen von Reibbelagelementen in einem Reibbelagblock möglich sind, ist es besonders vorteilhaft, den Bremsbelagträger mit einem Reibbelagblock 2b gemäss Fig. 8 auszustatten. Die Reibbelagelemente 1 weisen hierbei einen im wesentlichen trapezartigen Grundriss auf und werden derart zum Reibbelagblock 2b zusammengefügt, dass sich eine einem Kreisringausschnitt angenäherte Aufsicht des Belagträgerblocks 2b ergibt: Bezogen auf die nicht dargestellte Bremsscheibe werden von radial innen nach radial aussen jeweils grössere Reibbelagelemente 1 vorgesehen, in Umfangsrichtung dagegen werden in der Grösse gleichartige, hinsichtlich der Halteranordnung jedoch gegebenenfalls unterschiedlich, spiegelbildlich zu einem Mittelradius 24 ausgebildete Reibbelagelemente aneinander gereiht. Beim Reibbelagblock 2b sind, in radialer Richtung der Bremsscheibe gesehen, drei Reibbelagelemente 1 unterschiedlicher Grösse und, in Umfangsrichtung gesehen, jeweils zwei Reibbelagelemente gleicher Grösse, insgesamt also sechs Reibbelagelemente 1 zusammengefügt. Die Halteränder 6 sind dabei derart angeordnet, dass sie sich jeweils an den nach aussen weisenden Seiten der Reibbelagelemente 1 befinden. An den zwei Zentralbereichen 17a und 17b, an welchen jeweils vier Reibbelagelemente 1 zusammenstossen, sind deren Ecken gebrochen ausgeführt und an diesen Ecken befinden sich die vorspringenden Halteränder 7. In den Zentralbereichen 17a und 17b befinden sich wiederum nur angedeutete Verbindungsglieder 19, welche an der nicht dargestellten Grundplatte befestigt sind und mit ihren Kopfabschnitten die Halteränder 7 übergreifen. Im übrigen entspricht auch der Bremsbelagträger mit dem Reibbelagblock 2b nach Fig. 8 den vorstehend beschriebenen Ausführungen und bedarf daher keiner weiteren Erläuterungen.

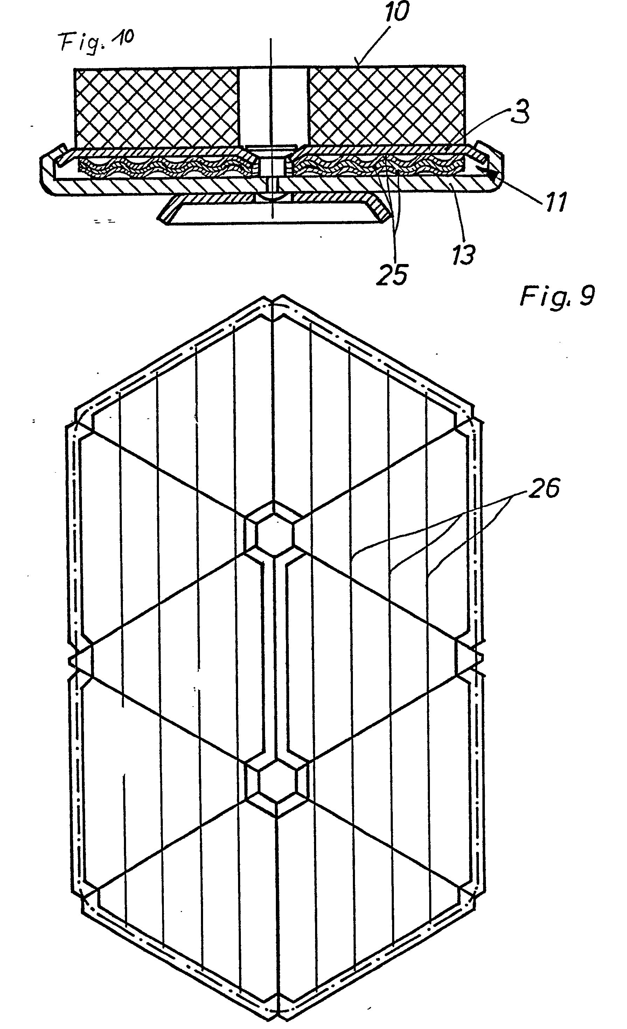

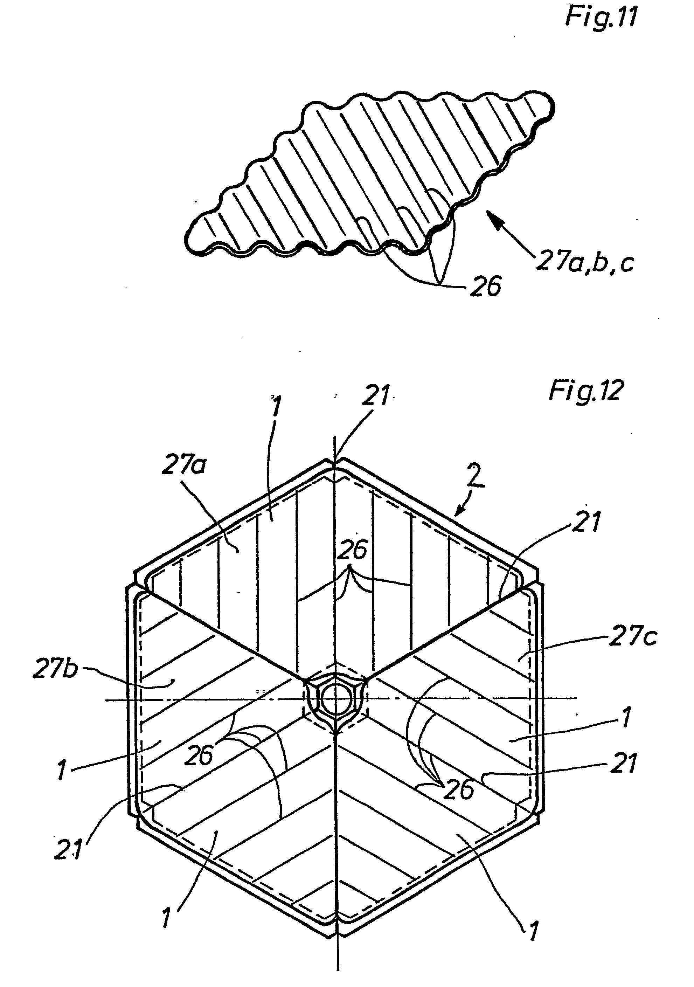

Als elastische Zwischenschicht 11 ist bei allen Ausführungsformen der Bremsbelagträger anstelle einer aus Elastomer bestehenden Platte auch eine Zwischenschicht aus gewelltem Blech verwendbar, wie es in Figur 9 und 10 dargestellt ist. Wie aus Figur 10 ersichtlich, werden als Zwischenschicht 11 zwischen dem Belagträgerblech 3 und der Grundplatte 13 mehrere Lagen 25 gewellten Bleches verwendet, wobei die Blechwellungen aller Lagen 25 gleichartig sind und ineinander greifen. Die einzelnen Wellblech-Lagen 25 sind dabei zweckmässig aus Federstahl gefertigt. In Figur 9, welche einen der Figur 6 entsprechenden Reibbelagblock zeigt, sind die gemeinsamen Wellachsen der Lagen 25 durch die Linien 26 angedeutet. Diese Ausführung der Zwischenschicht 11 ergibt eine grosse Dämpfung der Zwischenschicht 11 in senkrechter Richtung zur Reibfläche 10, da beim Zusammendrücken der Lagen 25 die einzelnen Blechlagen eine starke Reibung aneinander erfahren. Hierdurch wird eine weitere Bewegungs- bzw. Schwingungsdämpfung im Bremsbelägträger erzielt. Die Bleche der Lagen 25 können dabei zusätzlich mit reibsteigernden Oberflächen versehen sein, bzw. es können zwischen den einzelnen Lagen 25 reibsteigernde Zwischenschichten aus geeignetem Material eingelegt werden, wodurch die erwähnte Dämpfung nochmals gesteigert wird.

Bei Ausbildung der elastischen Zwischenschicht als gewellte Blechlagen 25 ist es besonders vorteilhaft, wenn in Aufsicht die Blechlagen-Zwischenschicht in einzelne Abschnitte unterteilt ist, deren jeder die Form zweier benachbarter, aneinander anliegender Reibbelagelemente 1 aufweist. In Figur 12 ist ein Reibbelagblock 2 gemäss Figur 1 dargestellt, wobei drei Abschnitte 27a, 27b und 27c eingezeichnet sind, deren jeder Abschnitt rautenförmige Gestalt aufweist. In Figur 11 ist ein einzelner Abschnitt 27a, b oder c in perspektivischer Ansicht dargestellt; die Linien 26 zeigen sowohl in Figur 11 wie in Figur 12 den jeweiligen Verlauf der Wellung an. Es ist wesentlich, dass die Abschnitte 27a, 27b und 27c völlig gleichartig sind, jeder Abschnitt kann natürlich, wie vorstehend zu Figur 10 beschrieben, aus wiederum mehreren Einzellagen gewellten Federstahl-Bleches bestehen. Aus Figur 12 ist ersichtlich, dass die Wellung gemäss den Linien 26 parallel zu den sich jeweils berührenden Seitenflächen 21 der jeweils einem Abschnitt 27a, b oder c zugeordneten, beiden Reibbelagelemente 1 verläuft. Dabei ist die Wellung gemäss Figur 13 derart ausgebildet, dass in der durch die erwähnten Seitenflächen 21 verlaufenden Ebene die Abschnitte 27a, b und c mit ihrer Wellung gerade auf der Grundplatte 13 aufliegen, wie es an der Stelle 28 in Figur 13 dargestellt ist. Durch diese Auflage ergibt sich, dass, wird das gemäss Figur 13 linke Reibbelagelement 1 in Richtung des Pfeiles 29 abwärts gedrückt, das rechts dargestellte, benachbarte Reibbelagelement 1 eine verstärkte Kraft in Pfeilrichtung 30 nach oben erfährt. Erfährt also durch irgendeine Unebenheit das gemäss Figur 13 linke Reibbelagelement 1 während Bremsungen eine erhöhte Flächenpressung und wird somit verstärkt abwärts gepresst, so erfährt das rechts benachbarte Reibbelagelement 1 eine entsprechend verstärkte Anpressung, wodurch sich insgesamt eine besonders gleichmässige Flächenpressung über die ganze Reibfläche 10 ergibt und sogenannte «hot spots» in der Reibzone zwischen dem Bremsbelagträger und der Bremsscheibe vermieden werden. Eine ähnliche, die Flächenpressungen in der Reibfläche 10 während Bremsungen ausgleichende Wirkung ergibt sich auch bei Verwendung einer aus einem Elastomer gefertigten, elastischen Zwischenschicht 11: Auch hier bewirkt eine verstärkte Einpressung eines Reibbelagelementes 1 eine verstärkte Abstützung bzw. Anhebung der benachbarten Reibbelagelemente. Als Reibwerkstoff für die Reibbelagelemente 1 wird zweckmässig ein Sintermetall verwendet; die Zusammenstellung der Reibbelagelemente zum Reibbelagblock 2, 2a oder 2b wirkt einem Ausbröckeln des Sintermetalls zumindest an den gemeinsamen Seitenflächen 21 entgegen.

*Bezugszeichenliste*

| | |
|---|---|
| 1 | Reibbelagelement |
| 2 | Reibbelagblock (2a, 2b) |
| 3 | Belagträgerblech |
| 4 | Längsseite |
| 5 | Ecke |
| 6 | Halterand |
| 7 | Halterand |
| 8 | Längsseite |
| 9 | Längsseite |
| 10 | Reibfläche |
| 11 | Zwischenschicht |
| 12 | Aussparung |
| 13 | Grundplatte |
| 14 | Fassung |
| 15 | Halterand |
| 16 | Haltenut |
| 17 | Zentralbereich (17a, 17b) |
| 18 | Aussparung |
| 19 | Verbindungsglied |
| 20 | Kopfabschnitt |
| 21 | Seitenfläche |
| 22 | Ansatz |
| 23 | Bremsbackenträger |
| 24 | Mittelradius |
| 25 | Lage |
| 26 | Linie |
| 27a 27b 27c | } Abschnitt |
| 28 | Stelle |
| 29 | Pfeil |
| 30 | Pfeil |
| s | Verschiebespiel |

**Patentansprüche**

1. Bremsbelagträger für Teilbelagscheibenbremsen, insbesondere von Schienenfahrzeugen, mit einer Grundplatte (13), die einerseits einen Reibbelag trägt und andererseits gegebenenfalls lösbar mit einem Trag- oder Betätigungselement (23) der Bremszuspannvorrichtung verbunden ist, wobei der Reibbelag in einzelne Reibbelagelemente (1) aufgegliedert ist, die senkrecht zur Reibfläche (10) elastisch an der Grundplatte (13) gehaltert sind, dadurch gekennzeichnet, dass die Grundplatte (13) in ihrem Randbereich als Fassung (14) ausgebildet ist, dass die gemeinsam einen Reibbelagblock (2, 2a, 2b) bildenden Reibbelagelemente (1) an der Fassung (14) gehalten sind, wobei die einzelnen Reibbelagelemente (1) ein Verschiebespiel(s) parallel zur Reibfläche (10) aufweisen, und dass in Wirkrichtung der an der Reibfläche (10) während Bremsvorgängen auftretenden Reibkräfte die Reibbelagelemente (1) unter gegenseitiger Abstützung aneinander anlegbar und gemeinsam gegen die Fassung (14) abstützbar sind.

2. Bremsbelagträger nach Anspruch 1, wobei die Reibbelagelemente (1) fest mit überstehenden Belagträgerblechen (3) verbunden sind, die mittels bolzenartiger Verbindungsglieder (19) an der Grundplatte (13) gehaltert sind, dadurch gekennzeichnet, dass der Reibbelagblock (2, 2a, 2b) eine in Aufsicht nahezu geschlossene Form aufweist, wobei sich in wenigstens einem Zentralbereich (17, 17a, 17b) eine zum Reibbelagblock (2, 2a, 2b) kleine Aussparung (18) befindet, dass die Belagträgerbleche (3) die Reibbelagelemente (1) jeweils an wenigstens zwei Kanten (Längsseite 4) oder Ecken (5) mit Halterändern (6, 7) überragen, die im Reibbelagblock (2, 2a, 2b) nach aussen oder zum Zentralbereich (17, 17a, 17b) weisen, an den restlichen Kanten und Ecken dagegen etwa ebenflächig zu den Seitenwandungen (8, 9) der Reibbelagelemente (1) enden, dass die unterbrochen oder umlaufend ausgebildete Fassung (14) in Aufsicht dem Grundriss des Reibbelagblockes (2, 2a, 2b) entspricht und aus einem in Richtung zur Reibfläche (10) abgewinkelten Halterand (15) mit Haltenut (16) gebildet ist, und dass die Reibbelagelemente (1) den Reibbelagblock (2, 2a, 2b) bildend unter Zwischenlage wenistens einer elastischen Zwischenschicht (11) auf die Grundplatte (13) aufgespannt sind, wobei die nach aussen weisenden Halteränder (6) in die Haltenut (16) und die dem Zentralbereich (17, 17a, 17b) zugewandten Halteränder (7) unter einen auskragenden Kopfabschnitt (20) des in jedem Zentralbereich (17, 17a, 17b) befindlichen, an der Grundplatte (13) gehaltenen Verbindungsgliedes (19) unter senkrecht zur Reibfläche (10) gerichteter Vorspannung eingespannt sind.

3. Bremsbelagträger nach Anspruch 1 oder 2, dadurch gekennzeichnet, dass zumindest nahezu alle benachbarten Reibbelagelemente (1) mit den gesamten, einander zugeordneten Seitenwandungen (8, 9) aneinander anlegbar sind.

4. Bremsbelagträger nach Anspruch 1, 2 oder 3, dadurch gekennzeichnet, dass zumindest nahezu alle Reibbelagelemente (1) eine gleiche Form aufweisen.

5. Bremsbelagträger nach Anspruch 2, 3 oder 4, dadurch gekennzeichnet, dass der Grundriss der Reibbelagelemente (1) im wesentlichen ein gleichseitiges Dreieck mit gegebenenfalls gerundeten Ecken darstellt, wobei die Halteränder (6, 7) an einer Längsseite (4) und der gegenüberliegenden Ecke (5) vorspringen (Figur 1, 5, 6, 9, 12).

6. Bremsbelagträger nach Anspruch 5, dadurch gekennzeichnet, dass sechs Reibbelagelemente (1) mit ihren ihre Ecken (5) überragenden Halterändern (7) zur Mitte weisend zu einem ringartigen Bremsbelagblock (2) zusammengefügt sind (Figur 1).

7. Bremsbelagträger nach Anspruch 6, dadurch gekennzeichnet, dass die nach aussen weisenden Längsseiten (4) der Reibbelagelemente (1) etwa dem Radius des Reibbelagblockes entsprechend gekrümmt sind (Figur 5).

8. Bremsbelagträger nach Anspruch 5, dadurch gekennzeichnet, dass wenigstens zehn Reibbelagelemente (1) zu einem ovalringartigen Reibbelagblock (2a) zusammengefügt sind, wobei jeweils vier Reibbelagelemente (1) mit ihren ihre Ecken (5) überragenden Halterändern (7) zu einem Zentralbereich (17a, 17b) weisend eine Gruppe bildend sich nebeneinander befinden und zwischen die beiden sich spiegelbildlich gegenüberstehenden Gruppen wenigstens zwei zu einer Raute zusammengefügte Reibbelagelemente (1), deren seitenkantenseitige Halteränder (6) einander zugewandt sind, eingefügt sind (Figur 6, 9, 12).

9. Bremsbelagträger nach Anspruch 2, 3 oder 4, dadurch gekennzeichnet, dass der Grundriss der Reibbelagelemente (1) im wesentlichen einem Sechseck entspricht, wobei wenigstens an zwei gegenüberliegenden Seitenkanten Halteränder (6, 7) vorspringen (Figur 7).

10. Bremsbelagträger nach Anspruch 2 oder 3, dadurch gekennzeichnet, dass der Grundriss der Reibbelagelemente (1) im wesentlichen einem Trapez entspricht, wobei jeweils eine, im aus wenigstens vier Reibbelagelementen zu einem Reibbelagblock (2b) zusammengesetzten Zustand einem Zentralbereich (17a, 17b) zugewandte Ecke gebrochen ausgebildet ist (Figur 8).

11. Bremsbelagträger nach Anspruch 1, dadurch gekennzeichnet, dass die Grundplatte (13) auf der dem Reibbelagblock (2, 2a, 2b) abgewandten Seite einen langgestreckten, schwalbenschwanzförmigen Ansatz (22) trägt, der in die Schwalbenschwanzführung eines Bremsbackenträgers (23) einführbar ist (Figur 2).

12. Bremsbelagträger nach Anspruch 2, dadurch gekennzeichnet, dass die elastische Zwischenschicht (11) als Elastomerplatte ausgebildet ist (Figur 2).

13. Bremsbelagträger nach Anspruch 2, dadurch gekennzeichnet, dass die elastische Zwischenschicht (11) aus wenigstens einer Lage (25) gewellten Bleches besteht (Figur 9 bis 13).

14. Bremsbelagträger nach Anspruch 13, dadurch gekennzeichnet, dass bei mehreren Lagen (25) gewellten Bleches die Blechwellungen aller Lagen zueinander gleich sind (Figur 9 bis 13).

15. Bremsbelagträger nach Anspruch 6, 7, 8 oder 10 und 13 oder 14, dadurch gekennzeichnet, dass jeweils zwei benachbarten Reibbelagelementen (1) ein Abschnitt (27a, 27b, 27c) der gewellten Blechlage (25) zugeordnet ist, dessen Wellachsen (Linien 26) parallel zur gegenseitigen Berührungsebene (Seitenfläche 21) der beiden Reibbelagelemente (1) verlaufen, wobei in der Berührungsebene (Seitenfläche 21) die Blechlage (25) an der Grundplatte (13) aufliegt (Figur 11, 12, 13).

16. Bremsbelagträger nach Anspruch 2, dadurch gekennzeichnet, dass die Reibbelagelemente (1) wie an sich bekannt aus Sintermetall bestehen.

**Claims**

1. Brake lining carrier for partially lined disc brakes, in particular of rail vehicles, having a base plate (13), which on one side carries a friction lining and on the other side is connected if necessary detachably to a carrier- or actuation element (23) of the brake clamping device, wherein the friction lining is divided into individual friction lining elements (1) which are flexibly supported on the base plate (13) perpendicular to the friction surface (10), characterised in that the base plate (13) is constructed in its edge area as a frame (14), in that the friction lining elements (1) jointly forming a friction lining block (2, 2a, 2b) are supported on the frame (14), whereby the individual friction lining elements (1) have a shifting clearance (s) parallel to the friction surface (10), and in that in the working direction of the friction forces occurring on the friction surface (10) during braking procedures, the friction lining elements (1) can be laid next to each other with reciprocal support and can be jointly supported against the frame (14).

2. Brake lining carrier according to claim 1, wherein the friction lining elements (1) are fixedly connected to overhanging lining carrier metal sheets (3) which are supported by means of bolt-like connection elements (19) on the base plate (13), characterised in that the friction lining block (2, 2a, 2b) has an almost closed form in plan view, whereby in at least a central area (17, 17a, 17b) there is located a small recess (18) in the friction lining block (2, 2a, 2b), in that the lining carrier sheets (3) project over the friction lining elements (1),respectively at at least two edges (longitudinal side 4) or corners (5), with retaining edges (6, 7) which in the friction lining block (2, 2a, 2b) face outwardly or to the central area (17, 17a, 17b), but on the other edges and corners they end with somewhat plane surfaces towards the side walls (8, 9) of the friction lining elements (1), in that in plan view the frame (14), constructed in broken or continuous manner, corresponds to the outline of the friction lining block (2, 2a, 2b) and is formed from a retaining edge (15) with a retaining groove (16), the edge being curved in the direction of the friction surface (10), and in that the friction lining elements (1) forming the friction lining block (2, 2a, 2b) are clamped onto the base plate (13) with the interposition of at least one resilient intermediate layer (11), whereby the retaining edges (6) facing outwards are inserted into the retaining groove (16), and the retaining edges (7) facing the central area (17, 17a, 17b) are inserted beneath a projecting head section (20) of the connecting element (19) located in each central area (17, 17a, 17b) and held on the base plate (13), under prestress directed perpendicularly to the friction surface (10).

3. Brake lining carrier according to claim 1 or 2, characterised in that at least almost all adjacent friction lining elements (1) can be laid adjacent to each other with the entire side walls (8, 9) associated with each other.

4. Brake lining carrier according to claim 1, 2 or 3, characterised in that at least almost all the friction lining elements (1) have the same shape.

5. Brake lining carrier according to claim 2, 3 or 4, characterised in that the outline of the friction lining elements (1) is a substantially equilateral triangle with rounded corners if necessary, whereby the retaining edges (6, 7) project on one longitudinal side (4) and the opposite corner (5). (Fig. 1, 5, 6, 9, 12).

6. Brake lining carrier ascording to claim 5, characterised in that six friction lining elements (1) with their retaining edges (7) projecting over their corners (5) are joined together facing the middle to form a ring-like brake lining block (2). (Fig. 1).

7. Brake lining carrier according to claim 6, characterised in that the outwardly facing longitudinal sides (4) of the friction lining elements (1) are curved approximately in accordance with the radius of the friction lining block (Fig. 5).

8. Brake lining carrier according to claim 5, characterised in that at least ten friction lining elements (1) are combined to form an oval ring shaped friction lining block (2a), whereby respectively four friction lining elements (1) which their retaining edges (7) projecting over their corners (5) facing a central area (17a, 17b) and forming a group are located next to each other, and between the two groups opposite each other in mirror-image fashion at least two friction lining elements (1) are combined to form a rhombus, whose lateral edge side retaining edges (6) face each other. (Fig. 6, 9, 12).

9. Brake lining carrier according to claim 2, 3 or 4, characterised in that the outline of the friction lining elements (1) corresponds substantially to a hexagon whereby retaining edges (6, 7) project on at least two opposite lateral edges (Fig. 7).

10. Brake lining carrier according to claim 2 or 3, characterised in that the outline of the friction lining elements (1) corresponds substantially to a trapezium, whereby respecvtively one corner facing a central area (17a, 17b) in the state composed of at least four friction lining elements forming a friction lining block (2b) is constructed in interrupted form (Fig. 8).

11. Brake lining carrier according to claim 1, characterised in that the base plate (13) on the side remote from the friction lining block (2, 2a, 2b) carries an oblong dovetail insert (22) which can be inserted into the dovetail guideway of a brake shoe carrier (23). (Fig. 2).

12. Brake lining carrier according to claim 2, characterised in that the resilient intermediate layer (11) is constructed as an elastomeric plate (Fig. 2).

13. Brake lining carrier according to claim 2, characterised in that the resilient intermediate layer (11) comprises at least one layer (25) of a corrugated metal sheet (Fig. 9 to 13).

14. Brake lining carrier according to claim 13, characterised in that in the case of several layers (25) of corrugated sheet metal the sheet metal corrugations of all the layers are identical (Fig. 9 to 13).

15. Brake lining carrier according to claim 6, 7, 8
or 10 and 13 or 14, characterised in that one section
(27a, 27b, 27c) of the corrugated sheet layer (25) is
associated respectively with two adjacent friction
lining elements (1), the corrugation axes of which
sheet layer (lines 26) run parallel to the opposite
plane of contact (side face 21) of the two friction lining elements (1), whereby in the plane of contact
(side face 21) the sheet layer (25) lies on the base
plate (13) (Fig. 11, 12, 13).

16. Brake lining carrier according to claim 2,
characterised in that the friction lining elements (1) as
is known comprise sintered metal.

**Revendications**

1. Support de garniture de frein pour des freins à
disque à garniture partielles, en particulier de véhicules sur rails, comportant une plaque de base (13) qui,
d'une part, porte une garniture de friction et qui,
d'autre part, est reliée, éventuellement de façon détachable, à un élément de support ou de commande
(23) du dispositif de serrage du frein, la garniture de
friction étant subdivisée en des éléments de garnitures de frein individuelles (1) qui sont montés élastiquement sur la plaque de base (13), perpendiculairement à la surface de friction (10), caractérisé par le
fait que la plaque de base (13) est réalisée, dans sa
partie marginale, sous la forme d'une gouttière (14),
que les éléments de garniture de friction (1) qui forment ensemble un bloc de garniture de friction (2, 2a,
2b) sont portés par la gouttière (14), les divers éléments de garniture de friction (1) présentant un jeu de
déplacement parallèle à la surface de friction (10), et
que, dans la direction d'action des forces de friction
qui apparaissent pendant les opérations de freinage
au niveau de la surface de friction (10), les éléments
de friction (1) sont, en s'appuyant mutuellement,
susceptibles de s'appliquer entre eux et de s'appuyer,
en commun contre la gouttière (14).

2. Support de garniture de frein selon la revendication 1, du type dans lequel les éléments de garniture
de friction (1) sont reliés rigidement à des tôles débordantes de support des garnitures (3), qui sont portées
par la plaque de base (13) à l'aide d'éléments de liaison (19) se présentant sous la forme de boulons,
caractérisé par le fait que le bloc de garniture de friction (2, 2a, 2b) se présente, en vue en plan, sous une
forme pratiquement fermée sur elle-même, alors
qu'au moins dans une zone centrale (17, 17a, 17b) est
prévue une faible ouverture (18) vers le bloc de garniture de friction (2, 2a, 2b), que les tôles de support
des garnitures (3) débordent les éléments de garnitures de friction (1) au niveau d'au moins deux bords
(côté longitudinal 4) ou aux sommets (5), par des
bords de maintien (6, 7) dirigés, dans le bloc de garnitures de friction (2, 2a, 2b), vers l'extérieur ou vers la
zone centrale (17, 17a, 17b) et se terminent, au
niveau des autres bords ou sommets à peu près de
façon plane par rapport aux parois latérales (8, 9) des
éléments de garniture de friction (1), que la gouttière
(14) réalisée avec interruptions ou sur tout le pourtour correspond, en vue élévation, à la vue en plan du
bloc de garnitures de friction (2, 2a, 2b) et est formée
par un bord de retenue (15) coudé en direction de la
surface de friction, avec gorge de retenue (16), et que
les éléments de garnitures de friction (1) qui forment
le bloc de garniture de friction (2, 2a, 2b), sont montés avec contrainte sur la plaque de base (13), avec
interposition d'au moins une couche intermédiaire
élastique (11), les bords de maintien (6), dirigés vers
l'extérieur, étant montés avec serrage dans la gorge
de maintien, et les bords de maintien (7) voisins de la
zone centrale (17, 17a, 17b) étant montés avec tension préalable dirigé perpendiculairement à la surface
de friction, sous une section de tête à collerette (20)
de l'élément de liasion (19) qui se situe dans chaque
zone centrale (17, 17a, 17b) et qui est maintenue sur
la plaque de base (13).

3. Supporte de garnitures de freins selon la revendication 1 ou 2, caractérisé par le fait qu'au moins
presque tous les éléments de garniture de freins voisins (1) sont susceptibles de s'appliquer l'un contre
l'autre avec la totalité des parois latérales (8, 9) associées entre elles.

4. Support de garnitures de freins selon la revendication 1, 2 ou 3, caractérisé par le fait qu'au moins
presque tous les éléments de garniture de friction (1)
possèdent une même forme.

5. Support de garnitures de freins selon la revendication 2, 3 ou 4, caractérisé par le fait que la vue en
plan des éléments de garniture de friction (1) représentent, pour l'essentiel, un triangle équilatéral avec
éventuellement des sommets arrondis, les bords de
maintien (6, 7) étant saillants sur un côté longitudinal
(4) alors que le sommet opposé (5) est saillant (figures 1, 5, 6, 9, 12).

6. Support de garnitures de freins selon la revendication 5, caractérisé par le fait que six éléments de
garniture de friction (1) sont assemblés, par leurs
bords de maintien (7) qui débordent leurs sommets
(5) et qui sont dirigés vers le milieu, pour former un
bloc de garniture de frein annulaires (2) (figure 1).

7. Spport de garnitures de freins selon la revendication 6, caractérisé par le fait que les côtés longitudinaux (4) des éléments de garnitures de friction (1),
qui sont dirigés vers l'extérieur, sont centrés à peu
près selon le rayon du bloc de garniture de friction
(figure 5).

8. Support de garnitures de freins selon la revendication 5, caractérisé par le fait qu'au moins deux éléments de garnitures de friction (1) sont assemblés
pour former un bloc de garniture de friction (2a) du
genre d'un anneau ovale, quatre éléments de garniture de friction (1) se situant les uns à côté des autres
par leurs bords de maintien (7) qui débordent leurs
sommets (5), en étant dirigés vers une zone centrale
(17a, 17b), en formant un groupe, alors qu'entre les
deux groupes qui se font face de façon symétrique,
sont insérés a moins deux éléments de garniture de
friction (1) assemblés en losange, et dont les bords de
maintien (6) qui sont voisins des bords latéraux, se
font face mutuellement.

9. Support de garniture de freins selon la revendication 2, 3 ou 4, caractérisé par le fait que la vue en
plan des éléments de garniture de friction (1) correspond sensiblement à un hexagone, des bords de maintien (6, 7) étant en saillie au moins au niveau de deux bords latéraux opposés (figure 7).

10. Support de garnitures de freins selon la revendication 2 ou 3, caractérisé par le fait que la vue en plan des éléments de garniture de frein (1) correspond sensiblement à un trapèze, un sommet voisin d'une zone centrale (17a, 17b) de l'assemblage formé par quatre éléments de garniture de friction qui constituent un bloc de garniture de friction (2b), étant tronqué (figure 8).

11. Support de garniture de freins selon la revendication 1, caractérisé par le fait que la plaque de base (13) porte, sur le côté qui est éloigné du bloc de garniture de friction (2, 2a, 2b), un appendice allongé en forme de queue d'aronde (22), qui est susceptible d'être inséré dans le guidage en queue d'aronde d'un support de mâchoire de frein (23) (figure 2).

12. Support de garniture de freins selon la revendication 2, caractérisé par le fait que la couche intermédiaire élastique (11) est réalisée sous la forme d'une plaque en élastomère (figure 2).

13. Support de garnitures de freins selon la revendication 2, caractérisé par le fait que la couche intermédiaire élastique (11) est constituée par au moins une couche d'une tôle ondulée (25) (figures 9 à 13).

14. Support de garnitures de freins selon la revendication 13, caractérisé par le fait que dans le cas de l'existence de plusieurs couches (25) d'une tôle ondulée, les ondulations de la tôle de toutes les couches sont identiques (figures 9 à 13).

15. Support de garnitures de freins selon la revendication 6, 7, 8 ou 10 et 13 ou 14, caractérisé par le fait qu'à deux éléments de garniture de friction (1) qui sont voisins, est associée une section (27a, 27b, 27c) de la couche de tôle ondulée (25) dont les axes des ondulations (ligne 26) s'étendent parallèlement au plan de contact mutuel (surface latérale 21) des deux éléments de garniture de friction (1), la couche de tôle (25) portant, dans le plan de contact (surface latérale 21), contre la plaque de base (13) (figures 11, 12, 13).

16. Support de garnitures de freins selon la revendication 2, caractérisé par le fait que les éléments de garniture de friction (1) sont constitués, de façon connue, avec un métal fritté.

*Fig.1*

*Fig. 3*

Fig. 4

Fig. 2

0 102 469

Fig.5,7

Fig.13

15

*Fig. 6*

Fig. 8

Fig. 10

10

3

11

25

13

Fig. 9

26

21

*Fig.11*

27a,b,c

26

*Fig.12*

27a

1

21

2

21

26

27c

27b

1

1

26

1

21

26

21

1

1